# EUROPÄISCHE PATENTSCHRIFT

(11) **EP 3 973 204 B1**
(45) Veröffentlichungstag und Bekanntmachung des Hinweises auf die Patenterteilung: **30.04.2025**
(21) Anmeldenummer: 20730195.3
(22) Anmeldetag: 15.05.2020
(51) Int. Cl.: F16D 65/12, B23K 26/34, C22C 38/40

(54) **REIBBREMSKÖRPER FÜR EINE REIBBREMSE EINES KRAFTFAHRZEUGS, REIBBREMSE UND VERFAHREN ZUM HERSTELLEN EINES REIBBREMSKÖRPERS**
FRICTIONAL BRAKE ELEMENT FOR A FRICTION BRAKE OF A MOTOR VEHICLE, FRICTION BRAKE, AND METHOD FOR PRODUCING A FRICTIONAL BRAKE ELEMENT
CORPS DE FREIN À FRICTION POUR UN FREIN À FRICTION D'UN VÉHICULE À MOTEUR, FREIN À FRICTION ET PROCÉDÉ DE FABRICATION D'UN CORPS DE FREIN À FRICTION

(30) Priorität: 18.05.2019 DE 102019207292
(43) Veröffentlichungstag der Anmeldung: 30.03.2022
(73) Patentinhaber: Robert Bosch GmbH, 70442 Stuttgart (DE); Breyden GmbH, 35236 Breidenbach (DE)
(72) Erfinder: POTAPENKO, Ilja, 35236 Biedenkopf (DE); SCHNATTERER, Christian, 61440 Oberursel (DE); WU, Kangjian, 35041 Marburg (DE)
(74) Vertreter: Clarenbach, Carl-Philipp
(86) Internationale Anmeldenummer: PCT/EP2020/063588
(87) Internationale Veröffentlichungsnummer: WO 2020/234144

(56) Entgegenhaltungen:
- EP-A1- 3 034 902
- DE-A1- 102009 008 114
- DE-B3- 10 345 000
- US-A1- 2017 122 392
- US-A1- 2020 072 307

## Beschreibung

Die Erfindung betrifft einen Reibbremskörper für eine Reibbremse eines Kraftfahrzeugs, insbesondere Bremsscheibe, mit einem insbesondere aus Grauguss gefertigten Basiskörper, mit einer auf dem Basiskörper aufgebrachten Verschleißschutzschicht und mit einer zwischen der Verschleißschutzschicht und dem Basiskörper liegenden Zwischenschicht.

Weiterhin betrifft die Erfindung eine Reibbremse für ein Kraftfahrzeug, mit wenigstens einer Bremsscheibe und wenigstens einem der Bremsscheibe zugeordneten und verlagerbaren Bremsklotz sowie ein Verfahren zum Herstellen des obenstehend beschriebenen Reibbremskörpers.

### Stand der Technik

Reibbremsen für Kraftfahrzeuge weisen üblicherweise als Reibbremskörper eine Bremsscheibe und zumindest einen Bremsklotz mit einem Bremsbelag auf, wobei der Bremsklotz zum Erzielen einer Bremswirkung gegen die Bremsscheibe gepresst wird. Die Bremsscheibe ist dabei üblicherweise drehfest mit einem Rad des Kraftfahrzeugs verbunden und der Bremsklotz karosseriefest verlagerbar angeordnet. Wird der Bremsklotz gegen die Bremsscheibe gepresst, so entsteht aufgrund des Reibkontakts zwischen Bremsklotz und Bremsscheibe ein Abrieb an der Bremsscheibe, der zum Verschleiß der Bremsscheibe sowie zu Bremsstaub führt, der in die Umwelt gelangt. Um diesen Verschleiß zu reduzieren, ist es bekannt, den Reibbremskörper zumindest in dem Kontaktbereich zu dem Bremsklotz mit einer Verschleißschutzschicht zu versehen. So ist es beispielsweise bekannt, Verschleißschutzschichten auf Basis von Hartmetallen oder Karbiden auf einem aus Grauguss gefertigten Basiskörper des Reibbremskörpers aufzubringen. Darüber hinaus ist es bekannt, zwischen der Verschleißschutzschicht und dem Basiskörper eine Zwischenschicht vorzusehen, die insbesondere als Haftvermittler und Korrosionsschutzschicht zwischen der Verschleißschutzschicht und dem Basiskörper dient.

Die Offenlegungsschrift DE 10 2009 008 114 A1 offenbart eine Bremsscheibe sowie ein Verfahren zu deren Herstellung mit einem aus Grauguss gefertigten Basiskörper und zumindest einer auf dem Basiskörper aufgebrachten Verschleißschutzschicht, wobei zwischen der Verschleißschutzschicht und dem Basiskörper weiterhin eine Zwischenschicht angeordnet ist. Eine gattungsgemäße Bremsscheibe ist weiterhin in der Offenlegungsschrift EP 3 034 902 A1 offenbart.

### Offenbarung der Erfindung

Der erfindungsgemäße Reibbremskörper mit den Merkmalen des Anspruchs 1 hat den Vorteil, dass die Adhäsion der Verschleißschutzschicht an der Zwischenschicht sowie die Rissbeständigkeit und die Korrosionsbeständigkeit des Reibbremskörpers verbessert werden. Dazu ist die Zwischenschicht erfindungsgemäß eine metallische Zwischenschicht und durch Laserauftragschweißen auf dem Basiskörper aufgebracht.

Insbesondere ist die metallische Zwischenschicht eine Nickel-, Kobalt- oder Eisenbasislegierung. Durch die niedrige Porosität, die mittels Laserauftragschweißen erreichbar ist, und daraus resultierende hohe Rissbeständigkeit dieser Zwischenschicht werden Rissausbreitung und Korrosion im Schichtsystem des Reibbremskörpers vermieden. Durch das Laserauftragschweißen wird außerdem gewährleistet, dass sich eine hohe Schichthaftung zwischen der Zwischenschicht und dem Basiskörper aufgrund der stofflichen Anbindung einerseits, sowie zwischen der Verschleißschutzschicht und der Zwischenschicht aufgrund einer bevorzugt hohen Oberflächenrauheit der mittels Laserauftragschweißen aufgebrachten Zwischenschicht und die daraus resultierende hohe Anbindungskraft andererseits ergibt.

Besonders bevorzugt ist die der Verschleißschutzschicht zugewandte Oberfläche der Zwischenschicht thermisch vorbehandelt, wodurch sich eine noch bessere Haftung der Verschleißschutzschicht an der Zwischenschicht ergibt. Insbesondere wird durch die Vorbehandlung die Oberfläche der Zwischenschicht gereinigt, beispielsweise mittels Laserstrahlbehandlung.

Gemäß einer bevorzugten Weiterbildung der Erfindung weist die metallische Zwischenschicht ein mindestens zweiphasiges Gefüge auf. Durch die unterschiedlichen Phasen wird erreicht, dass die Risszähigkeit der Zwischenschicht erhöht wird, weil der Rissfortschritt bei Übergang von einer Phase in die benachbarte Phase durch die unterschiedlichen Ausbildungen der Phasen gehemmt wird.

Vorzugsweise macht die jeweilige Phase mindestens 5 Vol.-% der Zwischenschicht aus. Hierdurch ergibt sich ein vorteilhaftes Gefüge, das die Risszähigkeit erhöht.

Weiterhin ist bevorzugt vorgesehen, dass die Verschleißschutzschicht eine durch thermisches Spritzen oder Laserauftragschweißen auf die Zwischenschicht aufgebrachte Verschleißschutzschicht ist. Damit ist auch die Verschleißschutzschicht auf die Zwischenschicht bevorzugt durch Laserauftragschweißen aufgebracht, wodurch sich bei der Herstellung des Schichtsystems ein kostengünstiger Herstellungsprozess ergibt.

Erfindungsgemäß ist die Verschleißschutzschicht als Eisenbasislegierung mit eingelagerten Hartstoffpartikeln bestehend aus Karbiden, Oxiden, Nitriden oder Boriden ausgebildet. Durch die genannten Zusatzstoffe wird die Eisenbasislegierung verstärkt und abriebsfest ausgebildet. Erfindungsgemäß entspricht die Schichtdicke der Zwischenschicht mindestens dem Doppelten der mittleren Partikelgröße der in der Verschleißschutzschicht eingelagerten Hartstoffpartikel. Dadurch wird ein
effektiver Korrosionsschutz durch eine geschlossene, dichte Zwischenschicht auch dann gewährleistet, falls bei der Herstellung unbeabsichtigt ein Hartstoffpartikel in die Zwischenschicht eingebaut wird.

Die erfindungsgemäße Reibbremse mit den Merkmalen des Anspruchs 7 zeichnet sich durch die Ausbildung der Bremsscheibe als erfindungsgemäßer Reibbremskörper aus. Es ergeben sich hierdurch die bereits genannten Vorteile.

Das erfindungsgemäße Verfahren mit den Merkmalen des Anspruchs 8 zeichnet sich dadurch aus, dass die metallische Zwischenschicht durch Laserauftragschweißen auf den Basiskörper aufgebracht wird. Es ergeben sich dadurch die bereits genannten Vorteile.

Weitere Vorteile und bevorzugte Ausführungsformen ergeben sich insbesondere aus den Ansprüchen sowie aus der obenstehenden Beschreibung.

Insbesondere wird der Basiskörper aus Grauguss gefertigt. Vorzugsweise wird zuerst die metallische Zwischenschicht und dann die Verschleißschutzschicht auf den Basiskörper aufgebracht. Vorzugsweise wird der Basiskörper vor dem Aufbringen der Zwischenschicht mechanisch oder thermisch vorbehandelt, insbesondere um den geometrischen Anforderungen zu genügen. Vorzugsweise wird auch die Zwischenschicht vor dem Aufbringen der Verschleißschutzschicht thermisch vorbehandelt, insbesondere gereinigt, beispielsweise mittels Laserstrahlbehandlung, um eine gute Schichthaftung zwischen Verschleißschutzschicht und Zwischenschicht zu gewährleisten. Insbesondere wird als Zwischenschicht eine Nickel-, Kobalt- oder Eisenbasislegierung auf dem Basiskörper aufgebracht. Dabei wird die Zwischenschicht bevorzugt derart hergestellt, dass sie ein zumindest zweiphasiges Gefüge aufweist, um die Risszähigkeit zu erhöhen. Vorzugsweise wird die Zwischenschicht derart hergestellt, dass die jeweilige Phase mindestens 5 Vol.-% der Zwischenschicht ausmacht. Vorzugsweise wird die Verschleißschutzschicht auf die Zwischenschicht durch Laserauftragschweißen oder thermisches Spritzen insbesondere als Eisenbasislegierung und insbesondere mit eingelagerten Hartstoffpartikeln bevorzugt bestehend aus Karbiden, Oxiden, Nitriden oder Boriden aufgebracht.

Im Folgenden soll die Erfindung anhand der Zeichnung näher erläutert werden. Dazu zeigen
- Figur 1: einen vorteilhaften Reibbremskörper in einer vereinfachten perspektivischen Darstellung,
- Figur 2: eine vereinfachte Darstellung eines Herstellungsverfahrens des Reibbremskörpers und
- Figur 3: ein Flussdiagramm zur Erläuterung des Herstellungsverfahrens.

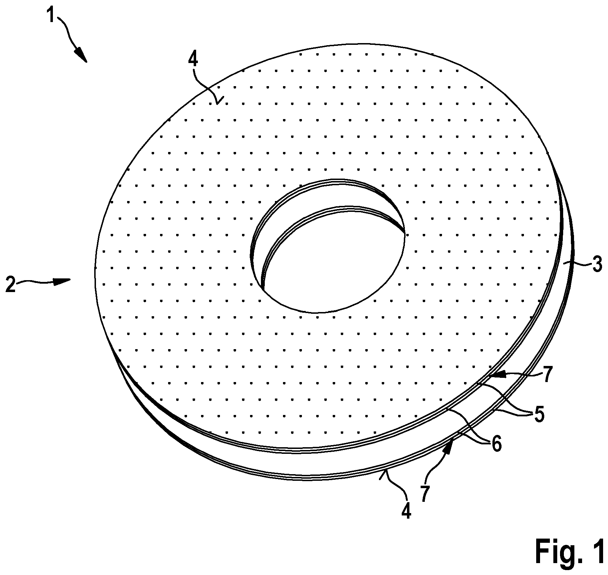

Figur 1 zeigt in einer vereinfachten perspektivischen Darstellung einen als Bremsscheibe 2 ausgebildeten Reibbremskörper 1 für eine hier nicht näher dargestellte Reibbremse eines Kraftfahrzeugs. Der Reibbremskörper 1 weist einen aus Grauguss gefertigten kreisringförmigen Basiskörper 3 auf. Ein optional vorhandener Bremsscheibentopf der Bremsscheibe 2 ist in Figur 1 nicht gezeigt. Auf seinen beiden Stirnseiten weist der Basiskörper 3 jeweils eine ringförmige Reibkontaktoberfläche 4 auf, die von einer Verschleißschutzschicht 5 des Reibbremskörpers 1 gebildet ist. Die Verschleißschutzschicht 5 bildet bei bestimmungsgemäßem Gebrauch einen Reibkontaktpartner für zumindest einen Bremsklotz oder Bremsbelag der Reibbremse, der zur Durchführung eines Bremsvorgangs gegen die Reibkontaktoberfläche 4 zur Erzielung einer Reibbremsung gepresst wird. Die Bremsscheibe 2 ist üblicherweise drehfest mit einem Rad des Kraftfahrzeugs verbunden, während der Bremsklotz gehäusefest nur in Richtung der Bremsscheibe 2 verlagerbar ist. Durch die Relativbewegung zwischen Bremsscheibe 2 und Bremsklotz entsteht beim Anpressen des Bremsklotzes gegen die Reibkontaktoberfläche 4 Abrieb an dem Reibbremskörper 1, der zum Verschleiß des Reibbremskörpers 1 führt, sowie zu Bremsstaub, der in die Umgebung des Kraftfahrzeugs gelangt.

Die Verschleißschutzschicht 5 reduziert diesen Verschleiß und erhöht die Abriebfestigkeit des Reibbremskörper 1. Erfindungsgemäß ist die Verschleißschutzschicht als Eisenbasislegierung ausgebildet, die eingelagerte Hartstoffpartikel bestehend
aus Karbiden, Oxiden, Nitriden oder Boriden aufweist, um die oben genannten Vorteile zu gewährleisten.

Um eine sichere Anhaftung der Verschleißschutzschicht 5 an dem Basiskörper 3 zu gewährleisten, ist zwischen der Verschleißschutzschicht 5 und dem Basiskörper 3 eine metallische Zwischenschicht 6 ausgebildet. Die Zwischenschicht 6 ist durch Laserauftragschweißen auf den Basiskörper 3 aufgebracht.

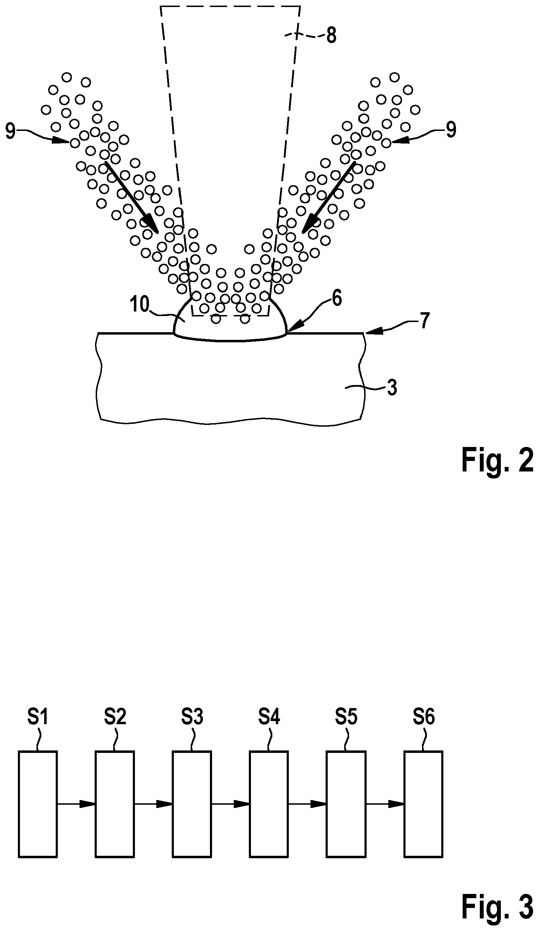

Hierzu zeigt Figur 2 in einer vereinfachten Schnittdarstellung den Prozess des Laserauftragschweißens. Dabei wird eine Randschicht 7 des Basiskörpers 3 durch einen Laserstrahl 8 derart erhitzt, dass die Randschicht 7 aufschmilzt. Gleichzeitig wird ein Zusatzstoff 9 zum Herstellen der metallischen Zwischenschicht als Nickel-, Kobalt- oder Eisenbasislegierung durch den Laserstrahl aufgeschmolzen und anschließend mit der aufgeschmolzenen Randschicht 7 vermischt, sodass insbesondere eine Schweißraupe 10, die die Zwischenschicht 6 bildet, entsteht.

Auf die so hergestellte Zwischenschicht 6 wird die Verschleißschutzschicht 5 insbesondere ebenfalls mittels Laserauftragschweißen aufgebracht.

Vorzugsweise wird die metallische Zwischenschicht 6 derart auf den Basiskörper 3 aufgebracht, dass sie ein zumindest zweiphasiges Gefüge aufweist. Insbesondere machen dabei die Phasen jeweils mindestens 5 Vol.-% der Zwischenschicht aus, um eine vorteilhafte Rissbeständigkeit beziehungsweise Risszähigkeit der Zwischenschicht zu gewährleisten. Durch das Vorhandensein unterschiedlicher Phasen wird erreicht, dass am Übergang von einer Phase in die Benachbarte ein sich ausbildender Riss gestoppt oder gehemmt wird, sodass eine Rissausbreitung durch die Zwischenschicht 6 hindurch vorteilhaft verhindert wird.

Figur 3 zeigt anhand eines Flussdiagramms ein vorteilhaftes Verfahren zur Herstellung des Reibbremskörpers 1. In einem ersten Schritt S1 wird der Basiskörper 3 bereitgestellt. Vorzugsweise ist der Basiskörper, wie zuvor bereits erwähnt, aus Grauguss gefertigt. In einem darauffolgenden Schritt S2 wird zumindest eine stirnseitige Oberfläche des Basiskörpers 3 mechanisch oder thermisch vorbearbeitet beziehungsweise vorbehandelt, insbesondere zur Aufrauung beziehungsweise geometrischen Anpassung der Oberfläche, auf welcher die metallische Zwischenschicht 6 aufgebracht werden soll. Anschließend wird in einem Schritt S3 die metallische Zwischenschicht 6 durch Laserauftragschweißen auf die stirnseitige Oberfläche des Basiskörpers 3 aufgebracht. Insbesondere ist die Zwischenschicht eine Nickel-, Kobalt- oder Eisenbasislegierung. Durch die stoffliche Anbindung aufgrund des Laserauftragschweißens wird gewährleistet, dass eine vorteilhafte Schichthaftung der Zwischenschicht 6 an dem Basiskörper 3 gewährleistet ist. Anschließend, nachdem die Zwischenschicht 6 ausreichend weit erstarrt beziehungsweise abgekühlt ist, wird die Zwischenschicht 6 in einem Schritt S4 optional thermisch an ihrer freien Oberfläche vorbehandelt, beispielsweise mittels Laserstrahlbehandlung. Anschließend wird die Verschleißschutzschicht 5 in einem Schritt S5 auf die Zwischenschicht 6 aufgebracht, insbesondere mittels Laserauftragschweißen oder thermischem Spritzen. Wie zuvor bereits erwähnt, wird die Verschleißschutzschicht 5 insbesondere als Eisenbasislegierung ausgebildet, die Karbide, Oxide, Nitride oder Boride zur Erhöhung der Verschleißbeständigkeit aufweist.

Anschließend wird der fertige Reibbremskörper 1 in einem Schritt S6 erhalten. Optional wird die Verschleißschutzschicht 5 mechanisch oder thermisch nachbearbeitet, insbesondere geschliffen, um eine gewünschte Oberflächenrauigkeit für das Zusammenwirken mit dem Bremsklotz der Reibbremse zu gewährleisten.

## Patentansprüche

1. Reibbremskörper (1) für eine Reibbremse eines Kraftfahrzeugs, insbesondere Bremsscheibe (2), mit einem insbesondere aus Grauguss gefertigten Basiskörper (3), mit zumindest einer auf dem Basiskörper (3) aufgebrachten Verschleißschutzschicht (5) und zumindest einer zwischen der Verschleißschutzschicht (5) und dem Basiskörper (3) liegenden Zwischenschicht (6), wobei die Verschleißschutzschicht (5) als Eisenbasislegierung mit eingelagerten Hartstoffpartikeln bestehend aus Karbiden, Oxiden, Nitriden oder Boriden ausgebildet ist, wobei die Zwischenschicht (6) eine durch Laserauftragschweißen aufgebrachte metallische Zwischenschicht (6) ist, wobei die Schichtdicke der Zwischenschicht (6) mindestens dem Doppelten der mittleren Partikelgröße der in der Verschleißschutzschicht (5) eingelagerten Hartstoffpartikel entspricht.

2. Reibbremskörper nach Anspruch 1, **dadurch gekennzeichnet, dass** die Zwischenschicht (6) eine Nickel-, Kobalt- oder Eisenbasislegierung ist.

3. Reibbremskörper nach einem der vorhergehenden Ansprüche, **dadurch gekennzeichnet, dass** die Zwischenschicht (6) ein mindestens zweiphasiges Gefüge aufweist.

4. Reibbremskörper nach Anspruch 3, **dadurch gekennzeichnet, dass** die jeweilige Phase mindestens 5 Vol.-% der Zwischenschicht (6) ausmacht.

5. Reibbremskörper nach einem der vorhergehenden Ansprüche, **dadurch gekennzeichnet, dass** die Verschleißschutzschicht (5) eine durch thermisches Spritzen oder Laserauftragschweißen auf die Zwischenschicht (6) aufgebrachte Verschleißschutzschicht (5) ist.

6. Reibbremskörper nach einem der vorhergehenden Ansprüche, **dadurch gekennzeichnet, dass** die der Verschleißschutzschicht (5) zugewandte Oberfläche der Zwischenschicht (6) thermisch vorbehandelt ist.

7. Reibbremse für ein Kraftfahrzeug, mit wenigstens einer Bremsscheibe (2) und wenigstens einem der Bremsscheibe (2) zugeordneten und verlagerbaren Bremsklotz, **gekennzeichnet durch** die Ausbildung der Bremsscheibe (2) als Reibbremskörper (1) nach einem der Ansprüche 1 bis 6.

8. Verfahren zum Herstellen eines Reibbremskörpers (1) für eine Reibbremse eines Kraftfahrzeugs, wobei ein insbesondere aus Grauguss gefertigter Basiskörper (3) mit zumindest einer Verschleißschutzschicht (5) und zumindest einer zwischen der Verschleißschutzschicht (5) und dem Basiskörper (3) liegenden metallischen Zwischenschicht (6) versehen wird, wobei die Verschleißschutzschicht (5) als Eisenbasislegierung mit eingelagerten Hartstoffpartikeln bestehend aus Karbiden, Oxiden, Nitriden oder Boriden hergestellt wird, wobei dass die Zwischenschicht (6) durch Laserauftragschweißen auf den Basiskörper (3) aufgebracht wird, wobei die Zwischenschicht (6) derart auf dem Basiskörper (3) aufgebracht wird, dass die Schichtdicke der Zwischenschicht (6) mindestens dem Doppelten der mittleren Partikelgröße von in der Verschleißschutzschicht (5) eingelagerten Hartstoffpartikeln entspricht.

9. Verfahren nach Anspruch 8, **dadurch gekennzeichnet, dass** die Zwischenschicht (6) derart auf dem Basiskörper (3) aufgebracht wird, dass sie ein zumindest zweiphasiges Gefüge aufweist.

## Claims

1. Friction brake body (1) for a friction brake of a motor vehicle, in particular a brake disk (2), with a base body (3) made in particular of grey cast iron, with at least one wear protection layer (5) applied onto the base body (3) and at least one intermediate layer (6) located between the wear protection layer (5) and the base body (3), wherein the wear protection layer (5) is formed as an iron-based alloy with embedded hard material particles consisting of carbides, oxides, nitrides or borides, wherein the intermediate layer (6) is a metallic intermediate layer (6) applied by laser deposition welding, wherein the layer thickness of the intermediate layer (6) corresponds to at least twice the mean particle size of the hard material particles incorporated in the wear protection layer (5).

2. Friction brake body according to claim 1, **characterized in that** the intermediate layer (6) is a nickel-, cobalt- or iron-based alloy.

3. Friction brake body according to one of the preceding claims, **characterized in that** the intermediate layer (6) has an at least two-phase structure.

4. Friction brake body according to claim 3, **characterized in that** the respective phase makes up at least 5% by volume of the intermediate layer (6).

5. Friction brake body according to one of the preceding claims, **characterized in that** the wear protection layer (5) is a wear protection layer (5) applied onto the intermediate layer (6) by thermal spraying or laser deposition welding.

6. Friction brake body according to one of the preceding claims, **characterized in that** the surface of the intermediate layer (6) facing the wear protection layer (5) is thermally pre-treated.

7. Friction brake for a motor vehicle, with at least one brake disk (2) and at least one displaceable brake pad associated with the brake disk (2), **characterized by** the design of the brake disk (2) as a friction brake body (1) according to one of claims 1 to 6.

8. Method for producing a friction brake body (1) for a friction brake of a motor vehicle, wherein a base body (3), which is made of in particular grey cast iron, is provided with at least one wear protection layer (5) and at least one metallic intermediate layer (6) situated between the wear protection layer (5) and the base body (3), wherein the wear protection layer (5) is produced as an iron-based alloy with embedded hard material particles consisting of carbides, oxides, nitrides or borides, wherein the intermediate layer (6) is applied onto the base body (3) by laser deposition welding, wherein the intermediate layer (6) is applied onto the base body (3) in such a way that the layer thickness of the intermediate layer (6) corresponds to at least twice the mean particle size of the hard material particles incorporated in the wear protection layer (5).

9. Method according to claim 8, **characterized in that** the intermediate layer (6) is applied onto the base body (3) in such a way that it has an at least two-phase structure.

## Revendications

1. Corps de frein à friction (1) pour un frein à friction d'un véhicule à moteur, en particulier disque de frein (2), avec un corps de base (3) réalisé en particulier en fonte grise, avec au moins une couche anti-usure (5) appliquée sur le corps de base (3) et au moins une couche intermédiaire (6) qui se trouve entre la couche anti-usure (5) et le corps de base (3), dans lequel la couche anti-usure (5) est réalisée en tant qu'alliage à base de fer avec des particules de matière dure incorporées se composant de carbures, d'oxydes, de nitrures ou de borures, dans lequel la couche intermédiaire (6) est une couche intermédiaire métallique (6) appliquée par le biais d'un placage au laser, dans lequel l'épaisseur de couche de la couche intermédiaire (6) correspond au moins au double de la taille de particule moyenne des particules de matière dure incorporées dans la couche anti-usure (5).

2. Corps de frein à friction selon la revendication 1, **caractérisé en ce que** la couche intermédiaire (6) est un alliage à base de nickel, de cobalt ou de fer.

3. Corps de frein à friction selon l'une quelconque des revendications précédentes, **caractérisé en ce que** la couche intermédiaire (6) présente une structure au moins biphasée.

4. Corps de frein à friction selon la revendication 3, **caractérisé en ce que** la phase respective représente au moins 5 % en volume de la couche intermédiaire (6).

5. Corps de frein à friction selon l'une quelconque des revendications précédentes, **caractérisé en ce que** la couche anti-usure (5) est une couche anti-usure (5) appliquée sur la couche intermédiaire (6) par le biais d'une pulvérisation thermique ou d'un placage au laser.

6. Corps de frein à friction selon l'une quelconque des revendications précédentes, **caractérisé en ce que** la surface, tournée vers la couche anti-usure (5), de la couche intermédiaire (6) fait l'objet d'un prétraitement thermique.

7. Frein à friction pour un véhicule à moteur, avec au moins un disque de frein (2) et au moins une plaquette de frein associée au disque de frein (2) et déplaçable, **caractérisé par** la formation du disque de frein (2) en tant que corps de frein à friction (1) selon l'une quelconque des revendications 1 à 6.

8. Procédé destiné à la fabrication d'un corps de frein à friction (1) pour un frein à friction d'un véhicule à moteur, dans lequel un corps de base (3) réalisé en particulier en fonte grise est doté d'au moins une couche anti-usure (5) et d'au moins une couche intermédiaire métallique (6) se trouvant entre la couche anti-usure (5) et le corps de base (3), dans lequel la couche anti-usure (5) est fabriquée en tant qu'alliage à base de fer avec des particules de matière dure incorporées se composant de carbures, d'oxydes, de nitrures ou de borures, dans lequel la couche intermédiaire (6) est appliquée sur le corps de base (3) par le biais d'un placage au laser, dans lequel la couche intermédiaire (6) est appliquée sur le corps de base (3) de telle sorte que l'épaisseur de couche de la couche intermédiaire (6) correspond au moins au double de la taille de particule moyenne de particules de matière dure incorporées dans la couche anti-usure (5).

9. Procédé selon la revendication 8, **caractérisé en ce que** la couche intermédiaire (6) est appliquée sur le corps de base (3) de telle sorte qu'elle présente une structure au moins biphasée.
